(19) Europäisches Patentamt / European Patent Office / Office européen des brevets

(11) **EP 1 612 140 B1**

(12) **FASCICULE DE BREVET EUROPEEN**

(45) Date de publication et mention
de la délivrance du brevet:
**13.02.2008   Bulletin 2008/07**

(51) Int Cl.:
*B64D 15/00* *(2006.01)*      *B64D 15/20* *(2006.01)*

(21) Numéro de dépôt: **05291276.3**

(22) Date de dépôt: **14.06.2005**

(54) **Procédé et dispositif de détection de dégradation de performances d'un aéronef**

Verfahren und Vorrichtung zur Ermittlung der Leistungsverschlechterung eines Flugzeuges

Method and device for detecting aircraft performance degradation

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR MK YU**

(30) Priorité: **28.06.2004  FR 0407034**

(43) Date de publication de la demande:
**04.01.2006   Bulletin 2006/01**

(73) Titulaire: **Avions de Transport Regional**
**31700 Blagnac (FR)**

(72) Inventeur: **Petit, Gérard**
**31400 Toulouse (FR)**

(74) Mandataire: **Bonnetat, Christian**
**CABINET BONNETAT**
**29, rue de St. Pétersbourg**
**75008 Paris (FR)**

(56) Documents cités:
**US-A- 5 457 630        US-A- 5 457 634**
**US-B1- 6 304 194**

• **R.T. MARSAHALL ET AL.: "Modelling of Airplane Performance from Flight-Test Results and Validation With An F-104G Airplane" NASA TECHNICAL NOTE, février 1973 (1973-02), XP008042719 EDWARDS, CAL**

**Description**

La présente invention concerne un procédé et un dispositif de détection de dégradation de performances d'un aéronef.

Un tel procédé et un tel dispositif sont connus de US-B1-6 304 194, qui représente l'art antérieur le plus proche.

On sait que, malgré une certification conforme aux règlements, des aéronefs, notamment des avions de transport, peuvent rencontrer des situations qui dégradent de façon importante l'aérodynamique, sans que l'équipage en ait conscience. Une telle situation peut entraîner un effet de surprise qui peut être la cause d'une réaction non adaptée de l'équipage, et ceci d'autant plus que, lorsque la dégradation des performances aérodynamiques devient importante, les qualités de vol sont modifiées et le contrôle de l'aéronef devient beaucoup plus difficile.

Les causes de dégradation des performances, les plus connues, sont notamment le givrage, l'absence de dégivrage au sol d'une cellule givrée, la neige, la pluie givrante, l'application de fluide de dégivrage ou anti-givrage, la captation sur des bords d'attaque d'insectes, la perte d'une partie d'un bord d'attaque ou d'un panneau de la voilure.

Quand un aéronef est confronté à l'une des situations précitées engendrant une dégradation de ses performances, sa résistance à l'avancement dans l'air augmente et la traînée croît. Dans un tel cas, si la puissance n'est pas modifiée, l'aéronef perd de la vitesse lorsqu'il est en maintien d'altitude, ou le taux de montée baisse lorsqu'il est en maintien de vitesse, ce qui peut bien entendu devenir très dangereux et n'est pas acceptable.

La présente invention a pour objet d'aider l'équipage dans de telles situations susceptibles d'être dangereuses. Elle concerne un procédé pour détecter, de façon simple, rapide et précise, une dégradation de performances d'un aéronef, en particulier une dégradation de performances due à des conditions de givrage sévère sur l'aéronef.

A cet effet, ledit procédé (revendication 1) est remarquable selon l'invention en ce que l'on réalise, de façon automatique et répétitive, la suite d'étapes suivante :

   a) on calcule au moins :

   - une masse actuelle de l'aéronef ;
   - à partir de ladite masse actuelle, une traînée théorique dudit aéronef ; et
   - une traînée actuelle dudit aéronef, ladite traînée actuelle CXa/c étant calculée à partir de l'expression suivante :

$$CXa/c = \frac{2.T}{R.S.TAS^2} - G$$

   dans laquelle :

   ■ R est une constante ;
   ■ S représente la surface de la voilure de l'aéronef ;
   ■ TAS est une vitesse air calculée ;
   ■ G est une valeur dépendant de TAS ; et
   ■ T est une valeur de traction ;

   b) on met en oeuvre au moins un premier ensemble de comparaisons, qui est relatif à la traînée et qui comprend au moins une comparaison entre ladite traînée actuelle et ladite traînée théorique ; et
   c) on détermine si une dégradation de performances de l'aéronef existe, au moins à partir dudit premier ensemble de comparaisons.

Avantageusement, si une dégradation de performances de l'aéronef est détectée à cette étape c), on émet au moins un message d'alerte correspondant à une étape d) suivante.

Ainsi, grâce à l'invention, on est en mesure de détecter de façon simple et rapide une dégradation de performances d'un aéronef, en prenant en compte des valeurs de traînée, dont une traînée théorique qui est calculée à partir de la masse estimée de l'aéronef, et d'avertir l'équipage lors d'une telle détection. Ce dernier peut alors prendre en connaissance de cause toutes les mesures nécessaires pour remédier à une telle situation susceptible d'être dangereuse.

Dans un mode de réalisation préféré, à l'étape a) :

   - on calcule ladite masse actuelle de l'aéronef, à partir de la masse initiale avant le vol et d'une consommation de carburant au cours du vol, qui dépend au moins de l'altitude de l'aéronef au cours du vol et du type dudit aéronef ; et/ou
   - on calcule ladite traînée théorique CXth, à partir de l'expression suivante :

$$CXth = f1\,(CZ^2) + f2(RE) + \Delta CXf$$

dans laquelle :

■ CZ est une valeur de traînée dépendant de la masse actuelle de l'aéronef ;
■ f1 ($CZ^2$) est une fonction dépendant de $CZ^2$ ;
■ f2(RE) est une fonction dépendant du nombre de Reynolds RE ; et
■ $\Delta CXf$ est une valeur dépendant de $CZ^2$ et CZ.

La présente invention peut être mise en oeuvre quelle que soit la phase de vol de l'aéronef. Toutefois, dans un mode de réalisation préféré, on vérifie si l'aéronef est en vol de croisière ou non, notamment en vérifiant si un mode de capture usuel d'altitude est engagé sur ledit aéronef.

Avantageusement, lorsque, grâce à la vérification précédente, il s'avère que l'aéronef n'est pas en vol de croisière, à l'étape c), on détermine si une dégradation de performances de l'aéronef existe, uniquement à partir dudit premier ensemble de comparaisons relatif à la traînée.

Dans ce cas, de façon avantageuse, on détecte une dégradation de performances de l'aéronef, si l'une des deux conditions A et B suivantes, relatives audit premier ensemble de comparaisons, est réalisée :

- condition A :

   • CXa/c > CXth + $\Delta CX1$, pendant une durée prédéterminée ;

- condition B :

   • CXa/c > CXth + $\Delta CX2$ ; et
   • $\Delta CXa/c$ > $\Delta CXth$ + $\Delta CX3$

pour lesquelles :

- CXa/c est la traînée actuelle calculée de l'aéronef ;
- CXth est la traînée théorique calculée de l'aéronef ;
- $\Delta CX1$, $\Delta CX2$ et $\Delta CX3$ sont des valeurs de traînée prédéterminées ;
- $\Delta CX2$ est par exemple égal à $\Delta CX1$ ;
- $\Delta CXa/c$ est un écart de traînée actuelle entre deux instants différents prédéterminés ; et
- $\Delta CXth$ est un écart de traînée théorique entre deux instants différents prédéterminés.

Par ailleurs, lorsque, grâce à la vérification précitée, il s'avère que l'aéronef est en vol de croisière :

- à l'étape a), on calcule de plus une vitesse de croisière théorique à partir de ladite masse actuelle de l'aéronef, et on mesure une vitesse actuelle de l'aéronef ;
- à l'étape b), on met en oeuvre un second ensemble de comparaisons, qui est relatif à la vitesse et qui comprend au moins une comparaison entre ladite vitesse actuelle et ladite vitesse de croisière théorique ; et
- à l'étape c), on détermine si une dégradation de performances de l'aéronef existe, également à partir dudit second ensemble de comparaisons relatif à la vitesse, donc à partir à la fois desdits premier et second ensembles de comparaisons relatifs respectivement à la traînée et à la vitesse.

Dans ce cas, avantageusement, à l'étape a), on calcule ladite vitesse de croisière théorique, à partir de la masse actuelle de l'aéronef, d'une altitude mesurée de l'aéronef et d'un écart de température entre une température standard et une température mesurée.

De plus, de façon avantageuse, à l'étape c), on détecte une dégradation de performances de l'aéronef en vol de croisière, si l'une des deux conditions C et D suivantes, relatives auxdits premier et second ensembles de comparaisons, est réalisée :

- condition C :

   • CXa/c > CXth+$\Delta CX4$ ; et

- IAS < IASth - $\Delta$IAS1,
  pendant une durée prédéterminée ;

- condition D :

  - CXa/c > CXth+$\Delta$CX4 ; et
  - IAS < IASth - $\Delta$IAS1 ; et
  - $\Delta$CXa/c > $\Delta$CXth+$\Delta$CX5

pour lesquelles, en plus des paramètres précités :

- $\Delta$CX4 et $\Delta$CX5 sont des valeurs de traînée prédéterminées ;
- IAS est la vitesse mesurée de l'aéronef ;
- IASth est la vitesse de croisière théorique calculée ; et
- $\Delta$IAS1 est un écart de vitesse prédéterminé.

Lorsqu'aucune des conditions C et D précitées n'est réalisée en vol de croisière, avantageusement, à l'étape c), on détecte une dégradation de performances de l'aéronef, si l'une des deux conditions E et F suivantes, relatives auxdits premier et second ensembles de comparaisons, est réalisée :

- condition E :

  - CXa/c > CXth+$\Delta$CX6 ; et
  - IAS < IASth - $\Delta$IAS2,
    pendant une durée prédéterminée ;

- condition F :

  - CXa/c > CXth+$\Delta$CX6 ;
  - IAS < IASth - $\Delta$IAS2 ; et
  - $\Delta$CXa/c > $\Delta$CXth + $\Delta$CX7

pour lesquelles, en plus des paramètres précités :

- $\Delta$CX6 et $\Delta$CX7 sont des valeurs de traînée prédéterminées ;
- $\Delta$CX6 est inférieur à $\Delta$CX4 ;
- $\Delta$CX7 est par exemple égal à $\Delta$CX5 ;
- $\Delta$IAS2 est un écart de vitesse prédéterminé ; et
- $\Delta$IAS2 est supérieur à $\Delta$IAS1.

En outre, de façon avantageuse, si aucune des conditions C, D, E et F précitées n'est réalisée en vol de croisière, on vérifie si l'une des deux conditions G et H suivantes, relatives auxdits premier et second ensembles de comparaisons, est réalisée :

- condition G :

  - CXa/c > CXth + $\Delta$CX8 ; et
  - IAS < IASth - $\Delta$IAS3,
    pendant une durée prédéterminée,

- condition H :

  - CXa/c > CXth + $\Delta$CX8 ;
  - IAS < IASth - $\Delta$IAS3 ; et
  - $\Delta$CXa/c > $\Delta$CXth + $\Delta$CX9,

pour lesquelles :

■ ΔCX8 et ΔCX9 sont des valeurs de traînée prédéterminée, ΔCX8 étant inférieure à ΔCX6 ; et

■ ΔIAS3 est un écart de vitesse prédéterminé, qui est inférieur à ΔIAS1 et à ΔIAS2 ; et

- si l'une desdites conditions G et H est réalisée, on émet à l'étape d) un message indiquant que la vitesse de croisière est faible.

Par ailleurs, dans un mode de réalisation particulier, lorsque l'on détecte une dégradation de performances, quelle que soit la phase de vol :

- on compare une vitesse mesurée IAS (en particulier la vitesse indiquée par un anémomètre) à une vitesse opérationnelle minimale MSIS calculée, relative à des conditions de givrage sévère ; et
- si ladite vitesse IAS est inférieure à ladite vitesse MSIS, on émet un message requérant une augmentation de vitesse.

En outre, avantageusement :

- on réalise les étapes a) à c) précitées, uniquement si des volets et le train d'atterrissage de l'aéronef sont rétractés ; et/ou
- on réalise les étapes b) et c) précitées, uniquement si au moins une condition de givrage précisée ci-dessous est réalisée et si en plus une température d'air statique mesurée est supérieure à une valeur prédéterminée.

La présente invention concerne également un dispositif (revendication 16) de détection et d'avertissement de dégradation de performances d'un aéronef.
Selon l'invention, ledit dispositif du type comportant :

- un ensemble de sources d'informations ;
- une unité centrale reliée audit ensemble de sources d'informations et susceptible de détecter une dégradation de performances d'un aéronef ;

- des moyens pour calculer au moins une masse actuelle de l'aéronef, une traînée actuelle dudit aéronef et, à partir de ladite masse actuelle, une traînée théorique dudit aéronef, ladite traînée actuelle CXa/c étant calculée à partir de l'expression suivante :

$$CXa/c = \frac{2.T}{R.S.TAS^2} - G$$

dans laquelle :

■ R est une constante ;
■ S représente la surface de la voilure de l'aéronef ;
■ TAS est une vitesse air calculée ;
■ G est une valeur dépendant de TAS ; et
■ T est une valeur de traction ;

- des moyens pour mettre en oeuvre au moins un premier ensemble de comparaisons, qui est relatif à la traînée et qui comprend au moins une comparaison entre ladite traînée actuelle et ladite traînée théorique ; et
- des moyens pour déterminer si une dégradation de performances de l'aéronef existe, au moins à partir dudit premier ensemble de comparaisons.

En outre, avantageusement, ladite unité centrale comporte, de plus :

- des moyens pour calculer une vitesse de croisière théorique, à partir de ladite masse actuelle de l'aéronef ;
- des moyens pour mesurer une vitesse actuelle de l'aéronef ;
- des moyens pour réaliser un second ensemble de comparaisons, qui est relatif à la vitesse et qui comprend au moins une comparaison entre ladite vitesse actuelle et ladite vitesse de croisière théorique ; et
- des moyens pour déterminer si une dégradation de performances de l'aéronef existe, également à partir dudit second ensemble de comparaisons relatif à la vitesse.

Par ailleurs, dans un mode de réalisation préféré :

- ledit ensemble de sources d'informations comporte une unité d'acquisition de données de vol, de type FDAU ("Flight Data Acquisition Unit" en anglais) qui, de façon usuelle, réalise l'acquisition de données pour un enregistreur de données de vol, de type FDR ("Flight Data Recorder" en anglais) ; et/ou
- lesdits moyens d'avertissement, qui sont destinés à avertir l'équipage d'une dégradation de performances ou d'une vitesse faible, comportent une unité d'interface de performance d'aéronef, de type APIU ("Aircraft Performance Interface Unit" en anglais) qui, de façon usuelle, réalise la gestion de la signalisation, ainsi que l'enregistrement des messages dans un enregistreur de données de vol de type FDR précité.

Lesdits moyens d'avertissement peuvent être de type visuel et/ou de type sonore.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un diagramme permettant de mettre en évidence les étapes successives d'un procédé mis en oeuvre par le dispositif conforme à l'invention.

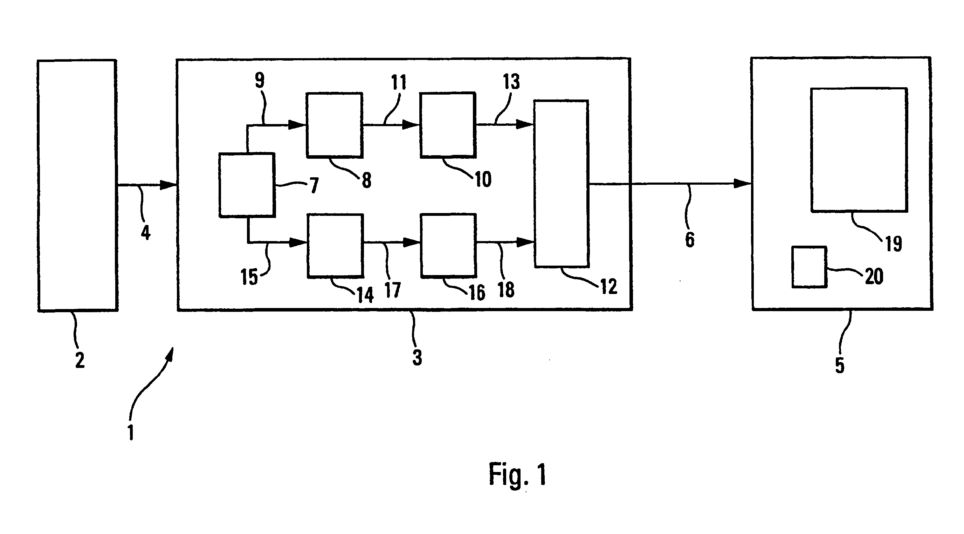

Le dispositif 1 conforme à l'invention et représenté schématiquement sur la figure 1 est un dispositif de détection et d'avertissement de dégradation de performances d'un aéronef non représenté, en particulier d'un avion de transport. Bien que non exclusivement, ledit dispositif 1 est destiné plus particulièrement à détecter une dégradation de performances dues à un problème de givrage sévère ou excessif sur l'aéronef.

Pour ce faire, ledit dispositif 1 qui est embarqué sur l'aéronef, est du type comportant :

- un ensemble 2 de sources d'informations ;
- une unité centrale 3 reliée par l'intermédiaire d'une liaison 4 audit ensemble 2 de sources d'informations et susceptible de détecter une dégradation de performances dudit aéronef ; et
- des moyens d'avertissement 5 qui sont reliés par l'intermédiaire d'une liaison 6 à ladite unité centrale 3.

Selon l'invention, ladite unité centrale 3 comporte :

- des moyens 7 pour calculer au moins une masse actuelle W de l'aéronef ;
- des moyens 8 qui sont reliés par l'intermédiaire d'une liaison 9 auxdits moyens 7, pour calculer une traînée actuelle CXa/c dudit aéronef et, à partir de ladite masse actuelle W, une traînée théorique CXth dudit aéronef ;
- des moyens 10 qui sont reliés par l'intermédiaire d'une liaison 11 auxdits moyens 8, pour mettre en oeuvre au moins un premier ensemble de comparaisons, qui est relatif à la traînée et qui comprend au moins une comparaison entre ladite traînée actuelle CXa/c et ladite traînée théorique CXth ; et
- des moyens 12 qui sont reliés par l'intermédiaire d'une liaison 13 auxdits moyens 10, pour déterminer si une dégradation de performances de l'aéronef existe, au moins à partir dudit premier ensemble de comparaisons.

Ainsi, grâce à l'invention, ledit dispositif 1 est en mesure, d'une part, de détecter de façon simple et rapide une dégradation de performances d'un aéronef, en prenant en compte des valeurs de traînée CXa/c et CXth, dont la traînée théorique CXth est calculée à partir de la masse estimée W de l'aéronef, et d'autre part, d'avertir l'équipage lors d'une telle détection, par l'intermédiaire desdits moyens d'avertissement 5.

Dans un mode de réalisation particulier, lesdits moyens 7 calculent ladite masse actuelle W de l'aéronef, à partir de la masse initiale WO avant le vol et d'une consommation de carburant au cours du vol qui dépend au moins de l'altitude de l'aéronef au cours dudit vol et du type dudit aéronef. Ce calcul est réalisé, par exemple à chaque seconde, à partir du décollage de l'aéronef jusqu'à son atterrissage final. Pour ce faire, ladite masse initiale WO peut être entrée par un membre d'équipage dans le dispositif 1, à l'aide par exemple d'un rotateur actionnable faisant partie dudit ensemble 2. Quant à la consommation de carburant, elle peut être présentée sur un tableau, en fonction de l'altitude et éventuellement de la vitesse de l'aéronef (à moins de prendre en compte une vitesse maximale prédéterminée pour chacune des différentes phases de vol), ledit tableau pouvant être enregistré directement dans lesdits moyens 7 ou dans une base de données non représentée dudit dispositif 1.

En outre, lesdits moyens 8 calculent ladite traînée théorique CXth, à partir de l'expression suivante :

$$CXth = f1(CZ^2) + f2(RE) + \Delta CXf$$

dans laquelle :

- CZ est une valeur de traînée précisée ci-dessous, dépendant de la masse actuelle W calculée ;

- f1(CZ$^2$) est une fonction dépendant de CZ$^2$ ;
- f2(RE) est une fonction dépendant du nombre de Reynolds RE ; et
- ΔCXf est une valeur dépendant de CZ$^2$ et CZ.

Les fonctions f1(CZ$^2$) et f2(RE) peuvent être présentées sous forme de tableaux qui peuvent être définis de manière empirique. De plus :

- ladite valeur CZ peut être calculée à l'aide de l'expression suivante :

$$CZ = \frac{2.W.g}{\rho.S.TAS^2}$$

dans laquelle :

   ■ g est l'accélération de la pesanteur ;
   ■ p est la densité de l'air ;
   ■ S est la surface de la voilure de l'aéronef ; et
   ■ TAS est une vitesse air calculée de façon usuelle ; et

- ladite valeur ΔCXf peut être calculée à l'aide de l'expression suivante :

$$\Delta CXf = A1.CZ^2 + A2.CZ + A3$$

avec A1, A2 et A3 des coefficients prédéterminés, définis par exemple de manière empirique.

Par ailleurs, lesdits moyens 8 calculent ladite traînée actuelle CXa/c, à partir de l'expression suivante :

$$CXa/c = \frac{2.T}{R.S.TAS^2} - G$$

dans laquelle :

- R est une valeur constante (constante des gaz parfaits) ;
- S représente la surface de la voilure de l'aéronef ;
- TAS est la vitesse air calculée ;
- G est une valeur dépendant de TAS et d'une altitude géométrique Zg ; et
- T est une valeur de traction.

La présente invention peut être mise en oeuvre quelle que soit la phase de vol (montée, croisière, descente) de l'aéronef. Toutefois, cette mise en oeuvre dépend de la phase de vol. Comme on le verra plus en détail ci-dessous, en phase de croisière, on prendra en compte des valeurs de traînée de l'aéronef ainsi que des valeurs de vitesse précisées ci-dessous, alors que dans les autres phases de vol, on prendra uniquement en compte lesdites valeurs de traînée.

Aussi, ladite unité centrale 3 comporte, de plus :

- des moyens 14, qui sont reliés par une liaison 15 auxdits moyens 7, pour calculer une vitesse de croisière théorique IASth, à partir de ladite masse actuelle W de l'aéronef ;
- des moyens qui sont par exemple intégrés dans l'ensemble 2, pour mesurer une vitesse actuelle IAS de l'aéronef ; et
- des moyens 16 qui sont reliés par une liaison 17 auxdits moyens 14, pour réaliser un second ensemble de comparaisons, qui est relatif à la vitesse et qui comprend au moins une comparaison entre ladite vitesse actuelle IAS et ladite vitesse de croisière théorique IASth.

De plus, lesdits moyens 12 qui ont pour objet de déterminer si une dégradation de performances de l'aéronef existe, peuvent également tenir compte (selon la phase de vol) dudit second ensemble de comparaisons relatif à la vitesse, reçu par l'intermédiaire d'une liaison 18 desdits moyens 16.

Lesdits moyens 14 calculent ladite vitesse de croisière théorique IASth, à partir de la masse actuelle W de l'aéronef, d'une altitude mesurée Zp de l'aéronef, et d'un écart de température $\Delta$ISA entre une température standard Tstd et une température d'air statique mesurée SAT.

Dans un mode de réalisation préféré, lesdits moyens 14 utilisent pour ce faire l'expression suivante :

$$IASth = a0 + a1.W + a2.W^2 + a3.\Delta ISA + a4.W.\Delta ISA + a5.\Delta ISA^2 + a6.Zp + a7.Zp.W + a8.Zp.\Delta ISA + a9.Zp^2$$

Les paramètres a0 à a9 sont des valeurs prédéterminées dépendant du type de l'aéronef considéré et définies par exemple de manière empirique.

Par ailleurs, le dispositif 1 conforme à l'invention comporte également des moyens faisant par exemple partie de l'ensemble 2, pour vérifier si l'aéronef est en vol de croisière ou non. A cet effet, ces moyens vérifient par exemple si un mode de capture d'altitude usuel est engagé sur ledit aéronef, et ceci depuis une durée prédéterminée, par exemple depuis 2 minutes.

Lorsque, grâce à la vérification précédente, il s'avère que l'aéronef n'est pas en vol de croisière (mode de capture d'altitude non engagé ou non engagé depuis la durée prédéterminée précitée), lesdits moyens 12 déterminent si une dégradation de performances de l'aéronef existe, uniquement à partir dudit premier ensemble de comparaisons relatif à la traînée, reçu desdits moyens 10.

Dans ce cas, lesdits moyens 12 détectent une dégradation de performances de l'aéronef, si l'une des deux conditions A et B suivantes, relatives audit premier ensemble de comparaisons, est réalisée :

- condition A :

  • CXa/c > CXth + $\Delta$CX1, pendant une durée prédéterminée, par exemple 30 secondes ;

- condition B :

  • CXa/c > CXth + $\Delta$CX2 ; et
  • $\Delta$CXa/c > $\Delta$CXth + $\Delta$CX3

pour lesquelles :

- CXa/c est donc la traînée actuelle calculée de l'aéronef ;
- CXth est donc la traînée théorique calculée de l'aéronef ;
- $\Delta$CX1, $\Delta$CX2 et $\Delta$CX3 sont des valeurs de traînée prédéterminées ;
- $\Delta$CX2 est égal à $\Delta$CX1 ;
- $\Delta$CXa/c est un écart de la traînée actuelle CXa/c entre deux instants différents prédéterminés t1 et t2, par exemple l'instant actuel t1 et un instant précédent t2 correspondant à une durée prédéterminée (par exemple 30 secondes) avant l'instant actuel t1. Ainsi, $\Delta$ CXa/c=CXa/c(t1)-CXa/c(t2) ; et
- $\Delta$CXth est un écart de la traînée théorique CXth entre les deux instants différents t1 et t2 précités : $\Delta$CXth=CXth(t1)-CXth(t2).

En revanche, lorsque, grâce à la vérification précitée, il s'avère que l'aéronef est en vol de croisière (mode de capture d'altitude engagé), les moyens 12 déterminent si une dégradation de performances de l'aéronef existe, également à partir dudit second ensemble de comparaisons relatif à la vitesse, reçu desdits moyens 16 (en plus dudit premier ensemble de comparaisons relatif à la traînée, reçu desdits moyens 10).

Dans ce cas, lesdits moyens 12 détectent une dégradation de performances de l'aéronef, si l'une des deux conditions C et D suivantes, relatives auxdits premier et second ensembles de comparaisons, est réalisée :

- condition C :

  • CXa/c > CXth + $\Delta$CX4 ; et
  • IAS < IASth - $\Delta$IAS1,
    pendant une durée prédéterminée, par exemple 30 secondes ;

- condition D :

  - $CXa/c > CXth + \Delta CX4$ ; et
  - $IAS < IASth - \Delta IAS1$ ; et
  - $\Delta CXa/c > \Delta CXth + \Delta CX5$

pour lesquelles, en plus des paramètres précités :

- $\Delta CX4$ et $\Delta CX5$ sont des valeurs de traînée prédéterminées ;
- IAS est donc la vitesse actuelle mesurée de l'aéronef ;
- IASth est donc la vitesse de croisière théorique calculée ; et
- $\Delta IAS1$ est un écart de vitesse prédéterminé ;

Lorsqu'aucune des conditions C et D précitées n'est réalisée en vol de croisière, lesdits moyens 12 vérifient des conditions E et F et détectent une dégradation de performances de l'aéronef, si l'une desdites deux conditions E et F suivantes, relatives auxdits premier et second ensembles de comparaisons, est réalisée :

- condition E :

  - $CXa/c > CXth + \Delta CX6$ ; et
  - $IAS < IASth - \Delta IAS2$,
    pendant une durée prédéterminée, par exemple 30 secondes ;

- condition F :

  - $IAS < IASth - \Delta IAS2$ ; et
  - $\Delta CXa/c > \Delta CXth + \Delta CX7$

pour lesquelles, en plus des paramètres précités :

- $\Delta CX6$ et $\Delta CX7$ sont des valeurs de traînée prédéterminées ;
- $\Delta CX6$ est inférieur à $\Delta CX4$ ;
- $\Delta CX7$ est par exemple égal à $\Delta CX5$ ;
- $\Delta IAS2$ est un écart de vitesse prédéterminé ; et
- $\Delta IAS2$ est supérieur à $\Delta IAS1$.

Si, lors de l'une des vérifications précitées, une dégradation de performances de l'aéronef est détectée, lesdits moyens d'avertissement 5 émettent au moins un message d'alerte correspondant approprié. Pour ce faire, lesdits moyens d'avertissement 5 peuvent comporter :

- au moins un écran de visualisation 19 pour un affichage de messages d'alertes ; et/ou
- des moyens sonores 20 usuels,
  qui sont prévus dans le poste de pilotage de l'aéronef.

Par ailleurs, si aucune des conditions C, D, E et F précédente n'est réalisée en phase de croisière, lesdits moyens 12 vérifient si l'une des conditions G et H suivantes est réalisée :

- condition G :

  - $CXa/c > CXth + \Delta CX8$ ; et
  - $IAS < IASth - \Delta IAS3$,
    pendant une durée prédéterminée,

- condition H :

  - $CXa/c > CXth + \Delta CX8$ ;
  - $IAS < IASth - \Delta IAS3$ ; et
  - $\Delta CXa/c > \Delta CXth + \Delta CX9$,

dans lesquelles :

- ■ ΔCX8 et ΔCX9 sont des valeurs de traînée prédéterminée ΔCX8 étant inférieure à ΔCX6 ; et
- ■ ΔIAS3 est un écart de vitesse prédéterminé, qui est inférieur à ΔIAS1 et à ΔIAS2 ; et

- si l'une desdites conditions G et H est réalisée, lesdits moyens d'avertissement 5 émettent un message indiquant que la vitesse de croisière est faible.

Par ailleurs, dans un mode de réalisation particulier, lorsque l'unité centrale 3 détecte une dégradation de performances :

- elle compare une vitesse mesurée IAS à une vitesse opérationnelle minimale MSIS calculée, relative à des conditions de givrage sévère ; et
- si ladite vitesse IAS est inférieure à ladite vitesse MSIS, lesdits moyens d'avertissement 5 émettent un message requérant une augmentation de vitesse.

Ladite vitesse MSIS est calculée à partir des expressions suivantes :

$$\begin{cases} MSIS = MIS + VO \\ MIS = K.Vs \\ Vs = \left(\gamma.R.TO.5\left\{PO/P\left[(1+0,2.Ms^2)^{\gamma/\gamma-1} - 1\right] + 1\right\}^{(\gamma-1)/\gamma}\right)^{1/2} \\ Ms = \left[(W.g)/(0,7.P.S.CZ\,max)\right]^{1/2} \end{cases}$$

dans lesquelles, en plus des paramètres précités :

- VO est une valeur de vitesse prédéterminée ;
- K est un coefficient prédéterminé ;
- R est la constante des gaz parfaits ;
- TO est la température standard au niveau de la mer ;
- γ est une valeur prédéterminée ;
- P est la pression statique au niveau de l'aéronef ;
- PO est la pression statique au niveau de la mer ; et
- CZmax est une valeur prédéterminée.

Dans un mode de réalisation particulier :

- lesdits moyens 8 et 14 réalisent les calculs précités, généralement toutes les secondes, uniquement si des volets et le train d'atterrissage de l'aéronef sont rétractés. Une telle rétraction est vérifiée à l'aide de moyens usuels faisant par exemple partie de l'ensemble 2 de sources d'informations ; et
- lesdits moyens 10, 12 et 16 réalisent les comparaisons et les traitements précités, uniquement si la température d'air statique SAT mesurée est supérieure à une valeur prédéterminée, par exemple 5°C, et si l'une des conditions de givrage suivantes est réalisée :

  - ■ une accrétion de givre a déjà été détectée durant le vol en cours ;
  - ■ un indicateur lumineux de givrage est allumé ;
  - ■ un système de dégivrage du fuselage de l'aéronef est en fonctionnement.

Par ailleurs, dans un mode de réalisation préféré :

- ledit ensemble 2 de sources d'informations comporte une unité d'acquisition de données de vol, de type FDAU ("Flight Data Acquisition Unit" en anglais) qui, de façon usuelle, réalise l'acquisition de données pour un enregistreur de données de vol non représenté, de type FDR ("Flight Data Recorder" en anglais) ; et/ou
- lesdits moyens d'avertissement 5 comportent une unité d'interface de performance d'aéronef, de type APIU ("Aircraft Performance Interface Unit" en anglais) qui, de façon usuelle, réalise la gestion de la signalisation, ainsi que l'enregistrement des messages dans un enregistreur de données de vol de type FDR précité.

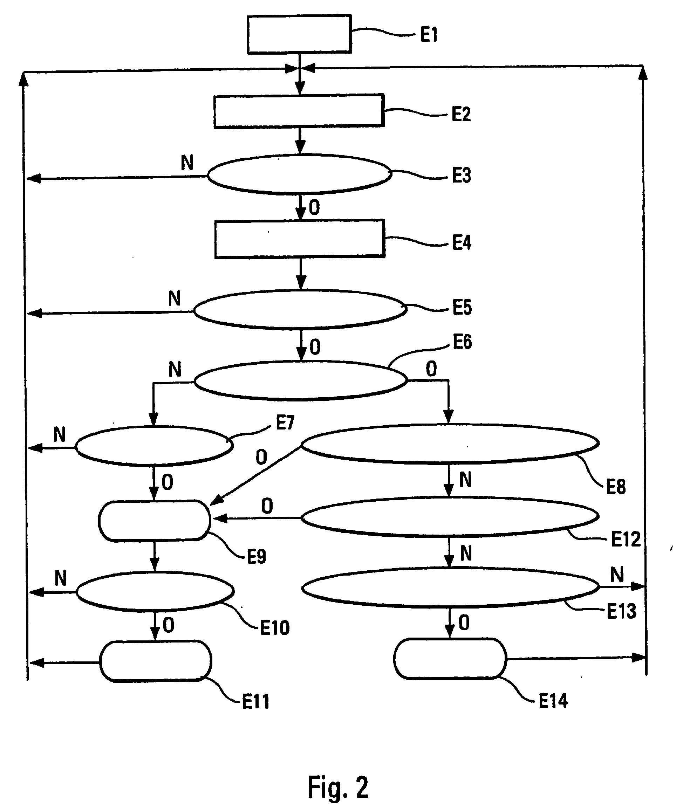

Le procédé mis en oeuvre par le dispositif 1 conforme à l'invention est présenté ci-après en référence au diagramme de la figure 2.

Ce procédé comporte :

- une étape préliminaire E1 d'entrée de la masse initiale WO dans le dispositif 1 ;
- une étape de calcul E2 pour calculer la masse actuelle W (moyens 7) ;
- une étape de vérification E3 pour vérifier si des volets et le train d'atterrissage de l'aéronef sont rétractés. Si la réponse est négative ("N" pour "non"), on revient à l'étape E2, sinon ("O" pour "oui"), on passe à une étape de calcul E4, puis à une étape de vérification E5 ;
- ladite étape de calcul E4 pour calculer :

  ■ la traînée actuelle CXa/c ;
  ■ la traînée théorique CXth ;
  ■ l'écart de traînée actuelle ΔCXa/c ;
  ■ l'écart de traînée théorique ΔCXth ;
  ■ la vitesse théorique de croisière IASth ; et
  ■ la vitesse opérationnelle minimale MSIS ;

- ladite étape de vérification E5 pour vérifier si au moins l'une des conditions de givrage précitées est réalisée et si une température d'air statique SAT mesurée est supérieure à une valeur prédéterminée. Si la réponse est négative, on revient à l'étape E2, sinon on passe à une étape de vérification E6 ;
- ladite étape de vérification E6 pour vérifier si l'aéronef est en vol de croisière ou non :

  ■ si non, on passe à une étape de vérification E7 ; et
  ■ si oui, on passe à une étape de vérification E8 ;

- ladite étape de vérification E7 pour vérifier si les conditions A et B précitées sont réalisées :

  ■ si oui, on passe à une étape E9, puis à une étape E10 ; et
  ■ si non, on revient à l'étape E2 ;

- ladite étape E9 d'émission d'un message alertant l'équipage d'une dégradation de performances (moyens d'avertissement 5) ;
- ladite étape E10 de comparaison de la vitesse IAS à la vitesse MSIS. Si la vitesse IAS est supérieure ou égale à la vitesse MSIS, on revient à l'étape E2, sinon on passe à une étape E11 ;
- ladite étape E11 d'émission d'un message requérant une augmentation de vitesse (moyens d'avertissement 5) ;
- ladite étape de vérification E8 pour vérifier en vol de croisière si les conditions C et D précitées sont réalisées :

  ■ si oui, on passe à ladite étape E9 ; et
  ■ si non, on passe à une étape E12 ;

- ladite étape de vérification E12 pour vérifier en vol de croisière si les conditions E et F précitées sont réalisées :

  ■ si oui, on passe à ladite étape E9 ; et
  ■ si non, on passe à une étape de vérification E13 ;

- ladite étape de vérification E13 pour vérifier en vol de croisière si la condition G précitée est réalisée :

  ■ si non, on revient à ladite étape E2 ; et
  ■ si oui, on passe à une étape E14 ;

- ladite étape E14 d'émission d'un message indiquant que la vitesse de croisière est faible (moyens d'avertissement 5).

**Revendications**

1. Procédé pour détecter une dégradation de performances d'un aéronef, procédé selon lequel on réalise, de façon automatique et répétitive, la suite d'étapes suivante :

a) on calcule au moins :

- une masse actuelle de l'aéronef ;
- à partir de ladite masse actuelle, une traînée théorique dudit aéronef ; et
- une traînée actuelle dudit aéronef, ladite traînée actuelle CXa/c étant calculée à partir de l'expression suivante :

$$CXa/c = \frac{2.\dot{T}}{R.S.TAS^2} - \dot{G}$$

dans laquelle :

. R est une valeur constante ;
. S représente la surface de la voilure de l'aéronef ;
. TAS est une vitesse air calculée ;
. G est une-valeur dépendant de TAS ; et · T est une valeur de traction ;

b) on met en oeuvre au moins un premier ensemble de comparaisons, qui est relatif à la traînée et qui comprend au moins une comparaison entre ladite traînée actuelle et ladite traînée théorique ; et
c) on détermine si une dégradation de performances de l'aéronef existe, au moins à partir dudit premier ensemble de comparaisons.

2. Procédé selon la revendication 1,
**caractérisé en ce que**, si une dégradation de performances de l'aéronef est détectée à l'étape c), on émet, à une étape d) suivante, au moins un message d'alerte correspondant.

3. Procédé selon l'une des revendications 1 et 2,
**caractérisé en ce qu'**à l'étape a), on calcule ladite masse actuelle de l'aéronef, à partir de la masse initiale avant le vol et d'une consommation de carburant au cours du vol qui dépend au moins de l'altitude de l'aéronef au cours du vol et du type dudit aéronef.

4. Procédé selon l'une quelconque des revendications précédentes,
**caractérisé en ce qu'**à l'étape a), on calcule ladite traînée théorique CXth, à partir de l'expression suivante :

$$CXth = f1(CZ^2) + f2(RE) + \Delta CXf$$

dans laquelle :

- CZ est une valeur de traînée dépendant de la masse actuelle ;
- f1 (CZ$^2$) est une fonction dépendant de CZ$^2$ ;
- f2(RE) est une fonction dépendant du nombre de Reynolds RE ; et
- ΔCXF est une valeur dépendant de CZ$^2$ et CZ.

5. Procédé selon l'une quelconque des revendications précédentes, **caractérisé en ce que** l'on vérifie, de plus, si l'aéronef est en vol de croisière ou non.

6. Procédé selon la revendication 5,
**caractérisé en ce que**, lorsque l'aéronef n'est pas en vol de croisière, à l'étape c), on détermine si une dégradation de performances de l'aéronef existe, uniquement à partir dudit premier ensemble de comparaisons relatif à la traînée.

7. Procédé selon la revendication 6,
**caractérisé en ce qu'**à l'étape c), on détecte une dégradation de performances de l'aéronef, si l'une des deux conditions A et B suivantes, relatives audit premier ensemble de comparaisons, est réalisée :

- condition A :

• CXa/c > CXth+$\Delta$OCX1, pendant une durée prédéterminée ;

- condition B :

• CXa/c > Xth+$\Delta$CX2 ; et
• $\Delta$CXa/c > $\Delta$CXth + $\Delta$CX3

pour lesquelles :
- CXa/c est la traînée actuelle calculée de l'aéronef ;
- CXth est la traînée théorique calculée de l'aéronef ;
- $\Delta$CX1, $\Delta$CX2 et $\Delta$CX3 sont des valeurs de traînée prédéterminées ;
- $\Delta$CXa/c est un écart de traînée actuelle entre deux instants différents prédéterminés ; et
- $\Delta$CXth est un écart de traînée théorique entre deux instants différents prédéterminés.

8. Procédé selon la revendication 5,
   **caractérisé en ce que**, lorsque l'aéronef est en vol de croisière :

   - à l'étape a), on calcule une vitesse de croisière théorique à partir de ladite masse actuelle de l'aéronef, et on mesure une vitesse actuelle de l'aéronef ;
   - à l'étape b), on met en oeuvre un second ensemble de comparaisons, qui est relatif à la vitesse et qui comprend au moins une comparaison entre ladite vitesse actuelle et ladite vitesse de croisière théorique ; et
   - à l'étape c), on détermine si une dégradation de performances de l'aéronef existe, également à partir dudit second ensemble de comparaisons relatif à la vitesse.

9. Procédé selon la revendication 8,
   **caractérisé en ce qu'**à l'étape a), on calcule ladite vitesse de croisière théorique, à partir de la masse actuelle de l'aéronef, d'une altitude mesurée de l'aéronef et d'un écart de température entre une température standard et une température mesurée.

10. Procédé selon l'une des revendications 8 et 9,
    **caractérisé en ce qu'**à l'étape c), on détecte une dégradation de performances de l'aéronef, si l'une des deux conditions C et D suivantes, relatives auxdits premier et second ensembles de comparaisons, est réalisée :

    - condition C :

    • CXa/c > CXth + $\Delta$CX4; et
    • IAS < IASth - $\Delta$IAS1,
    pendant une durée prédéterminée ;

    - condition D :

    • CXa/c > CXth + $\Delta$CX4 ; et
    • IAS < IASth - $\Delta$IAS1 ; et
    • $\Delta$CXa/c > $\Delta$CXth+$\Delta$CXS

pour lesquelles :

    - CXa/c est la traînée actuelle calculée de l'aéronef ;
    - CXth est la traînée théorique calculée de l'aéronef ;
    - $\Delta$CX4 et $\Delta$CX5 sont des valeurs de traînée prédéterminées ;
    - IAS est la vitesse mesurée de l'aéronef ;
    - IASth est la vitesse de croisière théorique calculée ;
    - $\Delta$IAS1 est un écart de vitesse prédéterminé ;
    - $\Delta$CXa/c est un écart de traînée actuelle entre deux instants différents prédéterminés ; et
    - $\Delta$CXth est un écart de traînée théorique entre deux instants différents prédéterminés.

**11.** Procédé selon la revendication 10,
**caractérisé en ce qu**'à l'étape c), on détecte une dégradation de performances de l'aéronef, si l'une des deux conditions E et F suivantes, relatives auxdits premier et second ensembles de comparaisons, est réalisée :

- condition E :

    • CXa/c > CXth+$\Delta$CX6 ; et
    • IAS < IASth - $\Delta$IAS2,
    pendant une durée prédéterminée ;

- condition F :

    • CXa/c > CXth + $\Delta$CX6 ;
    • IAS < IASth - $\Delta$IAS2 ; et
    • $\Delta$CXa/c > $\Delta$CXth +$\Delta$CX7

pour lesquelles :
- CXa/c est la traînée actuelle calculée de l'aéronef ;
- CXth est la traînée théorique calculée de l'aéronef ;
- $\Delta$CX6 et $\Delta$CX7 sont des valeurs de traînée prédéterminées ;
- $\Delta$CX6 est inférieur à $\Delta$CX4 ;
- IAS est la vitesse mesurée de l'aéronef ;
- IASth est la vitesse de croisière théorique calculée ;
- $\Delta$IAS2 est un écart de vitesse prédéterminé ;
- $\Delta$IAS2 est supérieur à $\Delta$IAS1 ;
- $\Delta$CXa/c est un écart de traînée actuelle entre deux instants différents prédéterminés ; et
- $\Delta$CXth est un écart de traînée théorique entre deux instants différents prédéterminés.

**12.** Procédé selon la revendication 11,
**caractérisé en ce que**, si aucune des conditions C, D, E et F n'est réalisée, on vérifie si l'une des deux conditions G et H suivantes, relatives auxdits premier et second ensembles de comparaisons, est réalisé :

- condition G :

    • CXa/c > CXth+$\Delta$CX8 ; et
    • IAS < IASth - $\Delta$IAS3,
    pendant une durée prédéterminée,

- condition H :

    • CXa/c > CXth+$\Delta$CX8 ;
    • IAS < IASth - $\Delta$IAS3 ; et
    • $\Delta$Xa/c > $\Delta$CXth + $\Delta$CX9,

pour lesquelles :

    ■ $\Delta$CX8 et $\Delta$CX9 sont des valeurs de traînée prédéterminée, $\Delta$CX8 étant inférieure à $\Delta$CX6 ; et
    ■ $\Delta$IAS3 est un écart de vitesse prédéterminé, qui est inférieur à $\Delta$IAS1 et à $\Delta$IAS2 ; et

- si l'une desdites conditions G et H est réalisée, on émet à l'étape d) un message indiquant que la vitesse de croisière est faible.

**13.** Procédé selon l'une quelconque des revendications précédentes,
**caractérisé en ce que**, lorsque l'on détecte une dégradation de performances :

- on compare une vitesse mesurée IAS à une vitesse opérationnelle minimale MSIS calculée, relative à des conditions de givrage sévère ; et
- si ladite vitesse IAS est inférieure à ladite vitesse MSIS, on émet un message requérant une augmentation de vitesse.

**14.** Procédé selon l'une quelconque des revendications précédentes,
**caractérisé en ce que** l'on réalise les étapes a) à c), uniquement si des volets et le train d'atterrissage de l'aéronef sont rétractés.

**15.** Procédé selon l'une quelconque des revendications précédentes,
**caractérisé en ce que** l'on réalise les étapes b) et c), uniquement si au moins une condition de givrage est réalisée et si une température d'air statique mesurée est supérieure à une valeur prédéterminée.

**16.** Dispositif de détection et d'avertissement de dégradation de performances d'un aéronef, ledit dispositif (1) comportant :

- un ensemble (2) de sources d'informations ;
- une unité centrale (3) reliée audit ensemble (2) de sources d'informations et susceptible de détecter une dégradation de performances d'un aéronef, ladite unité centrale (3) comportant :

. des moyens (7, 8) pour calculer au moins une masse actuelle de l'aéronef, une traînée actuelle dudit aéronef et, à partir de ladite masse actuelle, une traînée théorique dudit aéronef, lesdits moyens (8) étant formés de manière à calculer ladite traînée actuelle CXa/c, à partir de l'expression suivante :

$$CXa/c = \frac{2.T}{R.S.TAS^2} - G$$

dans laquelle :

· R est une valeur constante ;
. S représente la surface de la voilure de l'aéronef ;
. TAS est une vitesse air calculée ;
. G est une valeur dépendant de TAS ; et
. T est une valeur de traction ;

. des moyens (10) pour mettre en oeuvre au moins un premier ensemble de comparaisons, qui est relatif à la traînée et qui comprend au moins une comparaison entre ladite traînée actuelle et ladite traînée théorique ; et
. des moyens (12) pour déterminer si une dégradation de performances de l'aéronef existe, au moins à partir dudit premier ensemble de comparaisons ; et

- des moyens d'avertissement (5) reliés à ladite unité centrale (3).

**17.** Dispositif selon la revendication 16,
**caractérisé en ce que** ladite unité centrale (3) comporte, de plus :

- des moyens (14) pour calculer une vitesse de croisière théorique, à partir de ladite masse actuelle de l'aéronef ;
- des moyens (2) pour mesurer une vitesse actuelle de l'aéronef ;
- des moyens (16) pour réaliser un second ensemble de comparaisons, qui est relatif à la vitesse et qui comprend au moins une comparaison entre ladite vitesse actuelle et ladite vitesse de croisière théorique ; et
- des moyens (12) pour déterminer si une dégradation de performances de l'aéronef existe, également à partir dudit second ensemble de comparaisons relatif à la vitesse.

**18.** Dispositif selon l'une des revendications 16 et 17,
**caractérisé en ce que** ledit ensemble (2) de sources d'informations comporte une unité d'acquisition de données de vol.

**19.** Dispositif selon l'une des revendications 16 et 17,
**caractérisé en ce que** lesdits moyens d'avertissement (5) comportent une unité d'interface de performance d'aéronef.

**Claims**

1. A method for detecting a degradation of performance of an aircraft, according to which the following sequence of steps is carried out automatically and repetitively:

   a) we compute at least:

   - a current weight of the aircraft ;
   - on the basis of said current weight, a theoretical drag of said aircraft; and
   - a current drag of said aircraft, said current drag CXa/c being computed on the basis of the following expression:

   $$CXa/c = \frac{2.T}{R.S.TAS^2} - G$$

   in which:

   - • R is a constant value;
   - • S represents the area of the flying surface of the aircraft;
   - • TAS is a computed air speed;
   - • G is a value dependent-on TAS; and
   - • T is a value of traction;

   b) we implement at least a first set of comparisons, which relates to the drag and which comprises at least one comparison between said current drag and said theoretical drag; and
   c) we determine whether a degradation of performance of the aircraft exists, at least on the basis of said first set of comparisons.

2. The method as claimed in-claim 1,
   **characterized in that**, if a degradation of perf-ormance of the aircraft is detected in step c), then at least one corresponding alert message is emitted in a next step d).

3. The method as claimed in one of claims 1 and 2,
   **characterized in that** in step a), said current weight of the aircraft is computed on the basis of the initial weight before the flight and of a consumption of fuel during the flight which depends at least on the altitude of the aircraft during the flight and on the type of said aircraft.

4. The method as claimed in any one of the preceding claims,
   **characterized in that** in step a), said theoretical drag CXth is computed on the basis of the following expression:

   $$CXth = f1(CZ^2) + f2(RE) + \overline{\Delta CXf}$$

   in which:

   - CZ is a value of drag dependent on the current weight;
   - f1 ($CZ^2$) is a function dependent on $CZ^2$;
   - f2(RE) is a function dependent on the Reynolds number RE; and
   - $\Delta CXF$ is a value dependent on $CZ^2$ and CZ.

5. The method as claimed in any one of the preceding claims,
   **characterized in that** check is performed moreover to verify whether the aircraft is or is not in cruising flight.

**6.** The method as claimed in claim 5,
**characterized in that**, when the aircraft is not in cruising flight, in step c), we determine whether a degradation of performance of the aircraft exists, solely on the basis of said first set of comparisons relating to the drag.

**7.** The method as claimed in claim 6,
**characterized in that** in step c), a degradation of performance of the aircraft is detected if one of the following two conditions A and B, relating to said first set of comparisons, is fulfilled:

- condition A: •

 • CXa/c > CXth + $\Delta$CX1, predetermined duration;

- condition B:

 • CXa/c > CXth + $\Delta$CX2;
 • $\Delta$CXa/c > $\Delta$CXth + $\Delta$CX3

for which:

- CXa/c is the computed current drag of the aircraft;
- CXth is the computed theoretical drag of the aircraft;
- $\Delta$CX1, $\Delta$CX2 and $\Delta$CX3 are predetermined values of drag;
- $\Delta$CXa/c is a deviation of current drag between two different predetermined instants; and
- $\Delta$CXth is a deviation of theoretical drag between two different predetermined instants.

**8.** The method as claimed in claim 5,
**characterized in that**, when the aircraft is in cruising flight:

- in step a), a theoretical cruising speed is computed on the basis of said current weight of the aircraft, and a current speed of the aircraft is measured;
- in step b), a second set of comparisons is implemented, which relates to the speed and which comprises at least one comparison between said current speed and said theoretical cruising speed; and
- in step c), we determine whether a degradation of performance of the aircraft exists, likewise on the basis of said second set of comparisons relating to the speed.

**9.** The method as claimed in claim 8,
**characterized in that** in step a), said theoretical cruising speed is computed on the basis of the current weight of the aircraft, of a measured altitude of the aircraft and of a deviation of temperature between a standard temperature and a measured temperature.

**10.** The method as claimed in any one of claims 8 and 9,
**characterized in that** in step c), a degradation of performance of the aircraft is detected if one of the following two conditions C and D, relating to said first and second sets of comparisons, is fulfilled:

- condition C:

 • CXa/c > CXth + $\Delta$CX4; and
 • IAS < IASth - $\Delta$IAS1,
 for a predetermined duration;

- condition D:

 • CXa/c > CXth + $\Delta$CX4; and
 • IAS < IASth - $\Delta$IAS1; and
 • $\Delta$CXa/c > $\Delta$CXth + $\Delta$CX5

for which:

- CXa/c is the computed current drag of the aircraft;
- CXth is the computed theoretical drag of the aircraft;
- $\Delta$CK4 and $\Delta$CX5 are predetermined values of drag;
- IAS is the measured speed of the aircraft;
- IASth is the computed theoretical cruising speed;
- $\Delta$IAS1 is a predetermined deviation in speed;
- $\Delta$CXa/c is a deviation in current drag between two different predetermined instants; and
- $\Delta$CXth is a deviation in theoretical drag between two different predetermined instants.

11. The method as claimed in claim 10,
    **characterized in that** in step c), a degradation of performance of the aircraft is detected if one of the following two conditions E and F, relating to said first and second sets of comparisons, is fulfilled:

    - condition E:

        • CXa/c > CXth + $\Delta$CX6; and
        • IAS < IASth - $\Delta$IAS2,
        for a predetermined duration;

    - condition F: • CXa/c > CXth + $\Delta$CX6;

        • IAS < IASth - AIAS2; and
        • $\Delta$CXa/c > $\Delta$CXth + $\Delta$CX7

    for which:

        - CXa/c is the computed current drag of the aircraft;
        - CXth is the computed theoretical drag of the aircraft;
        - $\Delta$CX6 and $\Delta$CX7 are predetermined values of drag;
        - $\Delta$CX6 is less than $\Delta$CX4;
        - IAS is the measured speed of the aircraft;
        - IASth is the computed theoretical cruising speed;
        - $\Delta$IAS2 is a predetermined deviation of speed;
        - $\Delta$IAS2- is greater than $\Delta$IAS1;
        - $\Delta$CXa/c is a deviation of current drag between two different predetermined instants; and
        - $\Delta$CXth is a deviation of theoretical drag between two different predetermined instants.

12. The method as claimed in claim 11,
    **characterized in that**, if none of the conditions C, D, E and F is fulfilled, a check is performed to verify whether one of the following two conditions G and H, relating to said first and second sets of comparisons, is fulfilled:

    - condition G:

        • CXa/c > CXth + $\Delta$CX8-; and
        • IAS < IASth - $\Delta$IAS3,
        for a predetermined duration,

    - condition H:

        • CXa/c > CXth + $\Delta$CX8;
        • IAS < IASth - $\Delta$IAS3; and
        • $\Delta$CXa/c > $\Delta$CXth + $\Delta$CX9,

    for which:

        • $\Delta$CX8 and $\Delta$CX9 are predetermined drag values, $\Delta$CX8 being less than $\Delta$CX6; and
        • $\Delta$IAS3 is a predetermined deviation of speed, which is less than $\Delta$IAS1 and than $\Delta$IAS2; and

- if one of said conditions G and H is fulfilled, a message indicating that the cruising speed is low is emitted in step d).

**13.** The method as claimed in any one of the preceding claims, **characterized in that**, when a degradation of performance is detected:

- a measured speed IAS is compared with a computed minimum operational speed MSIS, relating to severe icing conditions;
- if said speed IAS is less than said speed MSIS, a message requesting an increase in speed is emitted.

**14.** The method as claimed in any one of the preceding claims, **characterized in that** steps a) to c) are carried out only if flaps and the landing gear of the aircraft are retracted.

**15.** The method as claimed in any one of the preceding claims, **characterized in that** in steps b) and c) are carried out only if at least one icing condition is fulfilled and if a measured static air temperature is greater than a predetermined value.

**16.** A device for detecting and warning of degradation of performance of an- aircraft, said device (1) comprising:

- a set (2) of information sources;
- a central unit (3) connected to said set (2) of information sources and able to detect a degradation of performance of an aircraft, said central unit (3) comprising:

  • means (7, 8) for computing at least one current weight of the aircraft, a current drag of said aircraft and, on the basis of said current weight, a theoretical drag of said aircraft, said means (8) being formed in order to calculate said current drag CXa/c being computed on the basis of the following expression:

$$CXa/c \ = \ \frac{2.T}{R.S.TAS^2} \ - \ G$$

in which:

■ R is a constant value;
■ S represents the area of the flying surface of the aircraft;
■ TAS is a computed air speed;
■ G is a value dependent on TAS; and
■ T is a value of traction;

  • means (10) for implementing at least one first set of comparisons, which relates to the drag and which comprises at least one comparison between said current drag and said theoretical drag; and
  • means (12) for determining whether a degradation of performance of the aircraft exists, at least on the basis of said first set of comparisons; and

- warning means (5) connected to said central unit (3) .

**17.** The device as claimed in claim 16, **characterized in that** said central unit (3) furthermore comprises:

- means (14) for computing a theoretical cruising speed, on the basis of said current weight of the aircraft;
- means (2) for measuring a current speed of the aircraft;
- means (16) for carrying out a second set of comparisons, which relates to the speed and which comprises at least one comparison between said current speed and said theoretical cruising speed; and
- means (12) for determining whether a degradation of performance of the aircraft exists, likewise on the basis of said second set of comparisons relating to the speed.

**18.** The device as claimed in one of claims 16 and 17, **characterized in that** said set (2) of information sources comprises a flight data acquisition unit.

19. The device as claimed in one of claims 16 and 17, **characterized in that** said warning means (5) comprise an aircraft performance interface unit.


**Patentansprüche**

1. Verfahren zur Ermittlung einer Leistungsverschlechterung eines Flugzeuges, Verfahren, mit dem automatisch und wiederholend folgende Abfolge von Schritten durchgeführt wird:

   a) berechnet werden mindestens:

   - eine aktuelle Masse des Flugzeuges,
   - ein theoretischer Widerstand dieses Flugzeuges anhand dieser aktuellen Masse und
   - ein aktueller Widerstand dieses Flugzeuges, wobei dieser aktuelle Widerstand CXa/c -mit folgender Formel berechnet wird:

$$CXa\,/\,c \;=\; \frac{2\,.T}{R.S.TAS^2} \;-\; G$$

   in der

   . R ein konstanter Wert ist,
   . S für die Flügelfläche des Flugzeuges steht,
   . TAS eine errechnete Luftgeschwindigkeit ist,
   . G ein von TAS abhängiger Wert und
   . T ein Antriebswert sind.

   b) es wird mindestens eine Vergleichsmenge angewendet, die sich auf den Widerstand bezieht und mindestens einen Vergleich zwischen dem aktuellen Widerstand und dem theoretischen Widerstand umfasst, und
   c) es wird mindestens anhand dieser ersten Vergleichsmenge ermittelt, ob eine Leistungsverschlechterung des Flugzeuges vorliegt.

2. Verfahren nach Anspruch 1,
   **dadurch gekennzeichnet, dass**, wenn eine Leistungsverschlechterung des Flugzeuges in Schritt c) ermittelt wird, in einem nächsten Schritt d) mindestens eine entsprechende Warnmeldung abgegeben wird.

3. Verfahren nach einem der Ansprüche 1 und 2,
   **dadurch gekennzeichnet, dass** in Schritt a) die aktuelle Masse des Flugzeuges anhand der anfänglichen Masse vor dem Flug und anhand eines Treibstoffverbrauchs während des Fluges, der mindestens von der Höhe des Flugzeuges während des Fluges und vom Typ dieses Flugzeuges abhängt, errechnet wird.

4. Verfahren nach einem beliebigen der vorgenannten Ansprüche,
   **dadurch gekennzeichnet, dass** in Schritt a) der theoretische Widerstand CXth nach folgender Formel berechnet wird:

$$CXth \;=\; f1(CZ^2) \;+\; f2(RE) \;+\; \Delta CXf$$

   in der

   - CZ ein von der aktuellen Masse abhängiger Widerstandswert,
   - f1 $(CZ^2)$ eine Funktion von $CZ^2$,
   - f2(RE) eine Funktion der Reynolds-Zahl RE und

- $\Delta$CXF ein von $CZ^2$ und CZ abhängiger Wert sind.

**5.** Verfahren nach einem beliebigen der vorgenannten Ansprüche,
**dadurch gekennzeichnet, dass** zusätzlich geprüft wird, ob sich das Flugzeug in Reiseflug befindet oder nicht.

**6.** Verfahren nach Anspruch 5,
**dadurch gekennzeichnet, dass**, wenn sich das Flugzeug nicht in Reiseflug befindet, in Schritt c) nur anhand der ersten Vergleichsmenge, die sich auf den Widerstand bezieht, ermittelt wird, ob eine Leistungsverschlechterung des Flugzeuges vorliegt.

**7.** Verfahren nach Anspruch 6,
**dadurch gekennzeichnet, dass** in Schritt c) eine Leistungsverschlechterung ermittelt wird, wenn eine der beiden folgenden Bedingungen A und B, die sich auf die erste Vergleichsmenge beziehen, erfüllt ist:

- Bedingung A:

• CXa/c > CXth + $\Delta$CX1 während einer vorgegebenen Dauer,

- Bedingung B: • CXa/c > CXth + $\Delta$CX2 und

• $\Delta$CXa/c > $\Delta$CXth + $\Delta$CX3,

wobei

- CXa/c der errechnete aktuelle Widerstand des Flugzeuges,
- CXth der errechnete theoretische Widerstand des Flugzeuges,
- $\Delta$CX1, $\Delta$CX2 und $\Delta$CX3 vorgegebene Widerstandswerte,
- $\Delta$CXa/c eine Differenz des aktuellen Widerstandes zwischen zwei vorgegebenen verschiedenen Zeitpunkten und
- $\Delta$CXth eine Differenz des theoretischen Widerstandes zwischen zwei vorgegebenen verschiedenen Zeitpunkten sind.

**8.** Verfahren nach Anspruch 5,
**dadurch gekennzeichnet, dass**, wenn sich das Flugzeug in Reiseflug befindet,

- in Schritt a) eine theoretische Reisefluggeschwindigkeit anhand der aktuellen Masse des Flugzeuges errechnet und eine aktuelle Geschwindigkeit des Flugzeuges gemessen werden,
- in Schritt b) eine zweite Vergleichsmenge, die sich auf die Geschwindigkeit bezieht und mindestens einen Vergleich zwischen der aktuellen Geschwindigkeit und der theoretischen Reisefluggeschwindigkeit umfasst, angewendet wird und
- in Schritt c) außerdem anhand dieser zweiten Vergleichsmenge, die sich auf die Geschwindigkeit bezieht, ermittelt wird, ob eine Leistungsverschlechterung des Flugzeuges vorliegt.

**9.** Verfahren nach Anspruch 8,
**dadurch gekennzeichnet, dass** in Schritt a) die theoretische Reisefluggeschwindigkeit anhand der aktuellen Masse des Flugzeuges, einer gemessenen Höhe des Flugzeuges und einer Temperaturdifferenz zwischen einer Standardtemperatur und einer gemessenen Temperatur errechnet wird.

**10.** Verfahren nach einem der Ansprüche 8 und 9,
**dadurch gekennzeichnet, dass** in Schritt c) eine Leistungsverschlechterung des Flugzeuges ermittelt wird, wenn eine der beiden folgenden Bedingungen C und D, die sich auf die erste und die zweite Vergleichsmenge beziehen, erfüllt ist:

- Bedingung C:

• CXa/c > CXth + $\Delta$CX4 und
• IAS < IASth - $\Delta$IAS1
während einer vorgegebenen Dauer,

- Bedingung D: • CXa/c > CXth + $\Delta$CX4 und

    • IAS < IASth - $\Delta$IAS1 und
    • $\Delta$CXa/c > $\Delta$CXth + $\Delta$CX5,

wobei

- CXa/c der errechnete aktuelle Widerstand des Flugzeuges,
- CXth der errechnete theoretische Widerstand des Flugzeuges,
- $\Delta$CX4 und $\Delta$CX5 vorgegebene Widerstandswerte,
- IAS die gemessene Geschwindigkeit des Flugzeuges,
- IASth die errechnete theoretische Reisefluggeschwindigkeit,
- $\Delta$IAS1 eine vorgegebene Geschwindigkeitsdifferenz,
- $\Delta$CXa/c eine Differenz des aktuellen Widerstandes zwischen zwei vorgegebenen verschiedenen Zeitpunkten und
- $\Delta$CXth eine Differenz des theoretischen Widerstandes zwischen zwei vorgegebenen verschiedenen Zeitpunkten sind.

11. Verfahren nach Anspruch 10,
**dadurch gekennzeichnet, dass** in Schritt c) eine Leistungsverschlechterung des Flugzeuges ermittelt wird, wenn eine der beiden folgenden Bedingungen E und F, die sich auf die erste und die zweite Vergleichsmenge beziehen, erfüllt ist:

- Bedingung E: • CXa/c > CXth + $\Delta$CX6 und

    • IAS < IASth - $\Delta$IAS2
    während einer vorgegebenen Dauer,

- Bedingung F: • CXa/c > CXth + $\Delta$CX6 und

    • IAS < IASth - $\Delta$IAS2 und
    • $\Delta$CXa/c > $\Delta$CXth + $\Delta$CX7,

wobei

- CXa/c der errechnete aktuelle Widerstand des Flugzeuges,
- CXth der errechnete theoretische Widerstand des Flugzeuges,
- $\Delta$CX6 und $\Delta$CX7 vorgegebene Widerstandswerte,
- $\Delta$CX6 kleiner als $\Delta$CX4,
- IAS die gemessene Geschwindigkeit des Flugzeuges,
- IASth die errechnete theoretische Reisefluggeschwindigkeit,
- $\Delta$IAS2 größer als $\Delta$IAS1,
- $\Delta$CXa/c eine Differenz des aktuellen Widerstandes zwischen zwei vorgegebenen verschiedenen Zeitpunkten und
- $\Delta$CXth eine Differenz des theoretischen Widerstandes zwischen zwei vorgegebenen verschiedenen Zeitpunkten sind.

12. Verfahren nach Anspruch 11,
**dadurch gekennzeichnet, dass**, wenn keine der Bedingungen C, D, E und F erfüllt ist, geprüft wird, ob eine der beiden folgenden Bedingungen G und H, die sich auf die erste und die zweite Vergleichsmenge beziehen, erfüllt ist:

- Bedingung G:

    • CXa/c > CXth + $\Delta$CX8 und
    • IAS < IASth - $\Delta$IAS3
    während einer vorgegebenen Dauer,

- Bedingung H:

• CXa/c > CXth + ΔCX8 und
• IAS < IASth - ΔIAS3 und
• ΔCXa/c > ΔCXth + ΔCX9,

wobei

■ ΔCX8 und ΔCX9 vorgegebene Widerstandswerte sind, wobei ΔCX8 kleiner ist als ΔCX6, und
■ ΔIAS3 eine vorgegebene Geschwindigkeitsdifferenz ist, die kleiner ist als ΔIAS1 und als ΔIAS2, und

- wenn eine der Bedingungen G und H erfüllt ist, wird in Schritt d) eine Meldung abgegeben, die besagt, dass die Reisefluggeschwindigkeit gering ist.

**13.** Verfahren nach einem beliebigen der vorgenannten Ansprüche, **dadurch gekennzeichnet, dass**, wenn eine Leistungsverschlechterung ermittelt ist,

- eine gemessene Geschwindigkeit IAS mit einer errechneten minimalen Betriebsgeschwindigkeit MSIS, die sich auf strenge Vereisungsbedingungen bezieht, verglichen wird und
- wenn die Geschwindigkeit IAS kleiner als diese Geschwindigkeit MSIS ist, eine Meldung abgegeben wird, die einer Erhöhung der Geschwindigkeit auffordert.

**14.** Verfahren nach einem beliebigen der vorgenannten Ansprüche, **dadurch gekennzeichnet, dass** die Schritte a) bis c) nur dann durchgeführt werden, wenn Klappen und das Fahrwerk des Flugzeuges eingezogen sind.

**15.** Verfahren nach einem beliebigen der vorgenannten Ansprüche, **dadurch gekennzeichnet, dass** die Schritte b) und c) nur dann ausgeführt werden, wenn mindestens eine Vereisungsbedingung erfüllt ist und wenn eine gemessene statische Lufttemperatur über einem vorgegebenen Wert liegt.

**16.** Vorrichtung zur Ermittlung und Meldung der Leistungsverschlechterung eines Flugzeuges, wobei diese Vorrichtung (1) Folgendes umfasst:

- einen Satz (2) von Informationsquellen,
- eine zentrale Einheit (3), die mit diesem Satz (2) von Informationsquellen verbunden ist und eine Leistungsverschlechterung des Flugzeuges ermitteln kann, wobei diese zentrale Einheit (3) wiederum Folgendes umfasst:

. Mittel (7, 8) zur Berechnung von mindestens einer aktuellen Masse des Flugzeuges, eines aktuellen Widerstandes dieses Flugzeuges und - anhand dieser aktuellen Masse - eines theoretischen Widerstandes dieses Flugzeuges, wobei diese Mittel (8) so ausgebildet sind, dass der aktuelle Widerstand CXa/c anhand der folgenden Formel errechnet wird:

$$CXa/c = \frac{2 \cdot T}{R.S.TAS^2} - G$$

in der

. R ein konstanter Wert ist,
. S für die Flügelfläche des Flugzeuges steht,
. TAS eine errechnete Luftgeschwindigkeit ist,
. G ein von TAS abhängiger Wert und
. T ein Antriebswert sind;

. Mittel (10) zur Anwendung von mindestens einer Vergleichsmenge, die sich auf den Widerstand bezieht und mindestens einen Vergleich zwischen dem aktuellen Widerstand und dem theoretischen Widerstand umfasst, und
.Mittel (12), um mindestens anhand der ersten Vergleichsmenge zu ermitteln, ob eine Leistungsverschlechterung des Flugzeuges besteht, und

- Meldemittel (5), die mit dieser zentralen Einheit (3) verbunden sind.

17. Vorrichtung nach Anspruch 16,
   **dadurch gekennzeichnet, dass** die zentrale Einheit (3) außerdem Folgendes umfasst:

   - Mittel (14) zur Berechnung einer theoretischen Reisefluggeschwindigkeit anhand der aktuellen Masse des Flugzeuges,
   - Mittel (2) zur Messung einer aktuellen Geschwindigkeit des Flugzeuges,
   - Mittel (16) zur Bildung einer zweiten Vergleichsmenge, die sich auf die Geschwindigkeit bezieht und mindestens einen Vergleich zwischen der aktuellen Geschwindigkeit und der theoretischen Reisefluggeschwindigkeit umfasst, und
   - Mittel (12), um außerdem anhand dieser zweiten Vergleichsmenge, die sich auf die Geschwindigkeit bezieht, zu ermitteln, ob eine Leistungsverschlechterung des Flugzeuges besteht.

18. Vorrichtung nach einem der Ansprüche 16 und 17,
   **dadurch gekennzeichnet, dass** der Satz (2) von Informationsquellen eine Einheit zur Erfassung der Flugdaten umfasst.

19. Vorrichtung nach einem der Ansprüche 16 und 17,
   **dadurch gekennzeichnet, dass** die Warnmittel (5) eine Schnittstelleneinheit für die Leistung des Flugzeuges umfassen.

Fig. 1

Fig. 2

## EP 1 612 140 B1

**RÉFÉRENCES CITÉES DANS LA DESCRIPTION**

**Documents brevets cités dans la description**

- US 6304194 B1